# EUROPEAN PATENT APPLICATION

(11) **EP 4 574 520 A1**
(43) Date of publication of application: **25.06.2025**
(21) Application number: 23465578.5
(22) Date of filing: 21.12.2023
(51) Int. Cl.: B60L 3/00, B60L 3/04, B60L 3/12, B60R 21/01

(54) **SAFETY APPARATUS AND METHOD FOR OPERATING THE SAFETY APPARATUS**

(71) Applicant: Schaeffler Technologies AG & Co. KG, 91074 Herzogenaurach (DE)
(72) Inventor: Bulgarasu, Constantin-Gabriel, 80687 München (DE)
(74) Representative: Vitesco Technologies

(57) **Abstract**

A safety apparatus for a high voltage (HV) component for an at least partially electrically powered vehicle comprises a monitoring unit, a processing unit, an error collection device, and a heating module. The monitoring unit is configured to check a crash line and to provide a first shut-off signal which is activated when the monitoring unit detects a crash. The processing unit is configured to provide a second shut-off signal which is activated when the processing unit receives the crash message. The error collection device is configured to control the energy transfer of the HV component dependent on the first shut-off signal and the second shut-off signal. The heating module is configured to detect transient errors within the crash detection dependent on the status of the first shut-off signal and the second shut-off signal and to provide pre-defined heating steps for the detected transient errors.

## Description

### TECHNICAL FIELD

The present disclosure relates to a safety apparatus and a method for operating the safety apparatus. Furthermore, the present disclosure relates to a healing module and a computer program for operating the safety apparatus as well as a computer readable medium.

### BACKGROUND

In a high-voltage on-board electrical system of an at least partially electrically powered vehicle, which can also be referred to as a hybrid vehicle, and especially in a high-voltage on-board electrical system of a fully electrically powered vehicle, it is necessary to switch off the power supply safely and quickly in the event of an accident. For this purpose, feeding components, in particular an electrical energy storage device, in particular a battery, have a special control line, which is also referred to as terminal 30C (KL30C) or crash line.

Main contactors of the electrical energy storage system are supplied with energy via this line, so that a shutdown, as occurs during servicing, or a disconnection of this line, as occurs when a pyro fuse ignited by an airbag control unit is triggered, inevitably leads to the on-board electrical system, in particular the high-voltage components, being switched off. Other components, such as the drive inverters that may be present, also have hardware and/or software precautions to initiate safety-related measures as soon as the voltage at the KL30C drops.

The unrestricted autonomous driving of the vehicle in certain traffic areas such as highways, parking zones or other permitted zones (Operational Design Domain, ODD) requires that the vehicle's high-voltage components meet the highest safety requirements, i.e., ASIL D (Automotive Safety Integrity Level) in the functional safety measurement system in accordance with ISO 26262.

Due to autonomous driving feature available for the vehicle and ASIL D safety goals at HV components level, the former ASIL B crash line disconnection is not sufficient.

It is an object of the present disclosure to provide a safety apparatus for a vehicle which allows for crash detection based on the crash line of the vehicle which fulfills the ASIL D safety requirements.

### SUMMARY

According to the present disclosure, one or more of the above-mentioned objects are achieved by the features of the independent claims. Advantageous embodiments are given in the dependent claims.

According to a first aspect of the present disclosure, a safety apparatus for a high voltage (HV) component for an at least partially electrically powered vehicle comprises a monitoring unit, a processing unit, an error collection device, and a healing module. Such a HV component is or comprises, for example, a DC/DC converter which is configured to convert a high voltage on-board power supply voltage of the high-voltage on-board electrical system of the vehicle to a low voltage on-board power supply voltage of a low-voltage on-board electrical system of the vehicle and vice versa.

The monitoring unit is connectable to a crash line of the vehicle. The crash line is also named Klemme 30c (KL30c). The monitoring unit is configured to check whether voltage on the crash line is below a predefined threshold and to provide to an output terminal of the monitoring a first shut-off signal which is activated when the monitoring unit detects that the voltage on the crash line is below the predefined threshold and which indicates, when activated, that a vehicle crash occurred. The first shut-off can preferably take two states, activated and not activated. The different states preferably differ in a voltage level.

The processing unit comprises a communication interface and is configured to receive a crash message, wherein the crash message indicates a crash of the vehicle and is provided by an entity of the vehicle which is configured to detect a crash of the vehicle directly or indirectly. The entity is, for example, an airbag control unit or another vehicle control unit which is configured to receive sensor signals indicating a crash of the vehicle independently from the airbag control unit, and/or which are configured to receive a crash message, for example from the airbag control unit, and to forward it to the processing unit.

The processing unit is configured to provide on a terminal of the processing unit a second shut-off signal which is activated when the processing unit receives the crash message.

The second shut-off signal can preferably take two states, activated and not activated. The different states preferably differ in a voltage level.

Thus, an activation of the first shut-off signal is based on a hardware detection mechanism and an activation of the second shut-off signal is based on a software detection mechanism. Thus, both mechanisms may fulfill the requirements of ASIL B(D). Also, solutions with other ASIL combinations are possible, for example, one detection mechanism comprises ASIL A (D) and the other one ASILC (D).

An ASIL decomposition may be used to split an ASIL rating of a safety requirement into several safety requirements with a lower ASIL. Here, the safety requirement is, for example, split into independent elements (hardware mechanism and software mechanism) in order to achieve redundancy. The decomposed ASIL is marked accordingly so that decomposition can be verified.

The error collection device is configured to receive the first shut-off signal and the second shut-off signal and to provide a control signal to the HV component to control the energy transfer of the HV component dependent on the first shut-off signal and the second shut-off signal. Preferably, the error collection device fulfils the safety requirements of ASIL D.

The healing module is configured to check a status of the first shut-off signal and the second shut-off signal, and to detect transient errors within the crash detection dependent on the status of the first shut-off signal and the second shut-off signal and to provide pre-defined healing steps for the detected transient errors. The healing module may be implemented in software or may be implemented in a hybrid module comprising software and hardware. The healing module may be part of the processing unit, for example a software program which is executed by the processing unit.

The healing module allows that transient errors can be healed during a current driving cycle. The solution can be provided very cost-effectively.

In at least one embodiment of the first aspect the healing module is configured to check whether the first shut-off signal is activated and whether the second shut-off signal is activated. The healing module is configured, when it detects that only the first shut-off signal is activated, to check, after a predefined first period of time whether a condition which causes the activation of the first shut-off signal is still valid by monitoring the voltage on the crash line based on provided sensor signals and when the voltage is above the predefined threshold or another predefined threshold to cause the monitoring unit to deactivate the first shut-off signal, so that the error collection device provides the control signal to the HV component such that the energy transfer of the HV component is enabled. The sensor signals may be provided by the monitoring unit or by another sensor unit which is configured to sense the voltage on the crash line.

This ensures that brief voltage dips on the crash line do not cause the HV component to switch off permanently. It can be checked whether the vehicle has to be really transferred into a permanent safe state.

The healing module is further configured, when it detects that only the second shut-off signal is activated, to induce a reset of the processing unit after a predefined second period of time and, when during a predefined third period of time after a completion of the reset of the processing unit not any crash message is received, to cause the processing unit to deactivate the second shut-off signal, so that the error collection device provides the control signal to the HV component such that the energy transfer of the HV component is enabled.

This ensures that a faulty crash message do not cause the HV component to switch off permanently. It can be checked whether the vehicle has to be really transferred into a permanent safe state.

In at least one embodiment of the first aspect the healing module is configured, when detecting that the first shut-off signal and the second shut-off signal are activated, to cause the processing unit to keep the second shut-off signal activated for the complete remaining current driving cycle and to cause directly or indirectly the monitoring unit to keep the first shut-off signal activated for the complete remaining current driving cycle. The healing module may be configured to cause the processing unit to control the monitoring unit such that the monitoring unit keeps the first shut-off signal activated, such that the error collection device provides the control signal such that the energy transfer of the HV component is disabled for the complete current driving cycle. Thus, the vehicle is transferred in a permanent safe state, which requires a re-start of the vehicle to be reset.

In at least one embodiment of the first aspect the monitoring unit and the processing unit are configured to deactivate the first shut-off signal and the second shut-off signal, respectively, when the vehicle is re-started, so that the error collection device provides the control signal such that the energy transfer of the HV component is enabled.

For this process the monitoring unit and/or the processing unit may be controlled by the healing module based on a received start signal or message which indicates that a new driving cycle of the vehicle is started. The start signal may be dependent on the vehicle.

In at least one embodiment of the first aspect the healing module is configured, when detecting, after completion of an induced reset of the processing unit, that only the second shut-off signal is activated, to induce a further reset of the processing unit after a predefined fourth period of time.

In at least one embodiment according to the first aspect the healing module is configured to induce resets of the processing unit, because the second shut-off signal is activated but not the first shut-off signal, for a predefined number of times and after inducing resets of the processing unit the predefined number of times to cause the processing unit to keep the second shut of signal activated for the complete remaining driving cycle, so that the error collection device provides the control signal such that the energy transfer of the HV component is disabled.

This ensures, that in case a fault of the crash line the software detection mechanism finally effect. For example, in case that the crash line comprises a chafed cable which leads to a connection with another live line running in parallel, safe disconnection in the event of a crash or servicing would no longer be guaranteed by the hardware detection mechanism, as the power supply to the contactors could still be maintained via the line fault and the other safety reactions could also be suppressed.

According to a second aspect of the present disclosure, a method for operating a safety apparatus according to the first aspect comprises the following steps, which are, for example, performed by the healing module.

It is checked whether the first shut-off signal is activated and whether the second shut-off signal is activated. When it is detected that only the first shut-off signal is activated, it is checked, after a predefined first period of time whether a condition which causes the activation of the first shut-off signal is still valid by monitoring the voltage on the crash line based on provided sensor signals and when the voltage is above the predefined threshold or another predefined threshold the monitoring unit is caused to deactivate the first shut-off signal, so that the error collection device provides the control signal to the HV component such that the energy transfer of the HV component is enabled.

When it is detected that only the second shut-off signal is activated, a reset of the processing unit after a predefined second period of time is induced and, when during a predefined third period of time after the reset of the processing unit not any crash message is received, the processing unit is caused to deactivate the second shut-off signal, so that the error collection device provides the control signal to the HV component such that the energy transfer of the HV component is enabled.

In at least one embodiment according to the second aspect, when it is detected that the first shut-off signal and the second shut-off signal are activated, the processing unit is caused to keep the second shut-off signal activated for the complete remaining current driving cycle and the monitoring is caused to keep the first shut-off signal activated for the complete remaining current driving cycle.

In at least one embodiment according to the second aspect the monitoring unit and the processing unit are caused to deactivate the first shut-off signal and the second shut-off signal, respectively, when the vehicle is re-started.

In at least one embodiment according to the second aspect, when detecting, after completion of an induced reset of the processing unit, that only the second shut-off signal is activated, a further reset of the processing unit after a predefined fourth period of time is induced.

In at least one embodiment according to the second aspect, after inducing resets of the processing unit, because the second shut-off signal is activated but the first shut-off signal not, a predefined number of times the processing unit is caused to keep the second shut of signal activated for the complete remaining driving cycle.

According to a third aspect of the present disclosure, a computer program comprises instructions which, when the program is executed by a control computer, causes the computer to carry out the steps of the method according to the second aspect.

The control computer has a processor and a program memory. Alternatively, the program memory can be assigned to the control computer. The processor may have a central processing unit (CPU). The processor may be a general purpose processor, a microprocessor, a microcontroller, a digital signal processor (DSP), an application specific integrated circuit (ASIC), a field-programmable gate array (FPGA), or other programmable logic device, a discrete gate or transistor logic device, a discrete hardware component, or the like.

For the purposes of this document, the mention of such a computer program is synonymous with the notion of a program element and/or a software module and/or a computer program product containing instructions for controlling the control computer in order to coordinate the operation of the system or method in a suitable manner to achieve the effects associated with the method according to the invention. The computer program may be implemented as computer-readable instruction code in any suitable programming language such as JAVA, C++, etc.

According to a fourth aspect of the present disclosure, a computer-readable medium comprises instructions which, when executed by a control computer cause the control computer to execute the method according to the second aspect.

The computer program can be stored on a computer-readable storage medium (CD-Rom, DVD, Blu-ray disk, removable drive, volatile or non-volatile memory, in particular random access memory (RAM), read-only memory (ROM), erasable programmable read-only memory (EPROM) and/or flash memory. The storage medium can be a memory built into the processor, a memory located outside the processor on a module or a portable memory. The memory is configured to store associated program instructions and associated data.

Further, the computer program may be provided on a network, such as the Internet, from which it may be downloaded by a user as needed.

According to a fifth aspect of the present disclosure, a healing module comprises a processor and a program memory and is configured to execute the method according to the second aspect.

Embodiments of the first aspect are also valid for the second, third, fourth and fifth aspect.

### BRIEF DESCRIPTION OF THE DRAWINGS

It is to be understood that both the foregoing general description and the following detailed description are merely exemplary and are intended to provide an overview or framework to understand the nature and character of the claims. The accompanying drawings are included to provide a further understanding and are incorporated in, and constitute a part of, this description. The drawings illustrate one or more embodiments, and together with the description serve to explain principles and operation of the various embodiments. The same elements in different figures of the drawings are denoted by the same reference signs.

The drawings are not necessarily drawn to scale but are configured to clearly illustrate the disclosure.
- Figure 1: shows an exemplary embodiment of a safety apparatus and
- Figure 2: shows an exemplary flow chart for a program for a computer implemented method for operating the safety apparatus.

### DETAILED DESCRIPTION OF EMBODIMENTS

The present disclosure will now be described in greater detail hereinafter with reference to the accompanying drawings showing embodiments of the disclosure. The disclosure may, however, be embodied in many different forms and should not be construed as limited to the embodiments set forth herein. Rather, these embodiments are provided so that the disclosure will fully convey the scope of the disclosure to those skilled in the art. While features of the present disclosure may be discussed relative to certain embodiments and figures below, all embodiments of the present disclosure can include one or more of the advantageous features discussed herein. In other words, while one or more embodiments may be discussed as having certain advantageous features, one or more of such features may also be used in accordance with the various embodiments of the disclosure discussed herein. In similar fashion, while exemplary embodiments may be discussed below as device, system, or method embodiments it should be understood that such exemplary embodiments can be implemented in various devices, systems, and methods.

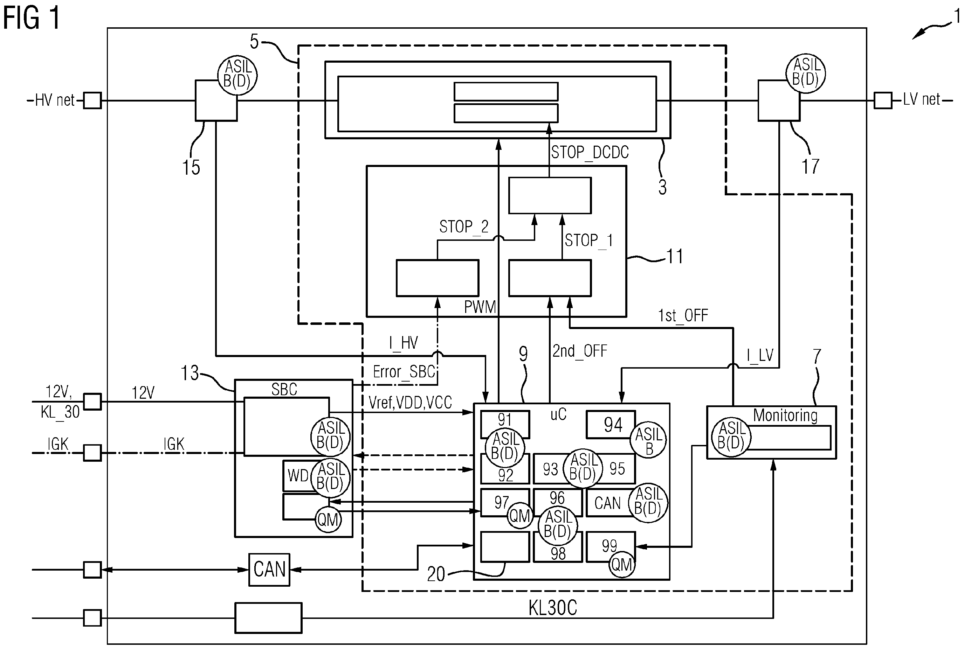

Figure 1 shows an exemplary embodiment of a system 1 of an at least partially electrically powered vehicle. In this embodiment the at least partially electrically powered vehicle is a fully electrically powered vehicle (BEV). The system 1 comprises a high voltage component (HV component) 3 of a high-voltage on-board electrical system of the vehicle. In this embodiment the HV component 3 is or comprises a high voltage/low voltage (HV/LV) DC/DC converter.

In an alternative embodiment the HV component 3 may comprise a traction e-motor inverter.

The HV/LV DC/DC converter is connected with its HV side to the high-voltage on-board electrical system and with its LV side to the low-voltage on-board electrical system of the vehicle.

The HV/LV DC/DC converter is configured to convert the high voltage on-board power supply voltage of the high-voltage on-board electrical system to a low voltage on-board power supply voltage of the low-voltage on-board electrical system of the electric vehicle and vice versa. The high voltage on-board power supply voltage may be 400 V or 800 V and the low voltage on-board power supply voltage may be 12 V, 24 V or 48 V.

In normal operation of the vehicle a HV battery (not shown in Figure 1) is connected to the high-voltage on-board electrical system and therefore to the HV/LV DC/DC converter. The HV battery is connected via a switching element to the high-voltage on-board electrical system. The switching element is configured to connect or disconnect the HV battery to the high-voltage on-board electrical system. The switching element may comprise a contactor or a semiconductor switch.

The switching element can get welded/melted or destroyed, e. g. stuck at closed state, when an error is detected, or short-circuited, respectively.

Due to ASIL D safety requirements for the HV battery, especially for autonomous driving, a limitation of an uncontrolled energy transfer of energy of the HV component 3, in particular from the low-voltage on-board electrical system into the high-voltage on-board electrical system through the HV/LV DC/DC converter, must be avoided in order to protect people in service shops or in the vehicle in case of a crash, after a malfunction of the system 1 (e.g. switches are welded, uncontrolled battery discharge or a soft crash).

Therefore, the system 1 comprises a safety apparatus 5. The safety apparatus 5 comprises a monitoring unit 7, a processing unit 9, an error collection device 11 and a healing module 20. The processing unit 9 may comprise a microcontroller or a microprocessor.

The monitoring unit 7 is connected to a crash line KL30C and configured to check whether voltage on the crash line KL30C is below a predefined threshold and to provide to an output terminal of the monitoring unit 7 a first shut-off signal 1 st_OFF which is activated when the monitoring unit 7 detects that the voltage on the crash line KL30C is below the predefined threshold and which indicates that a vehicle crash occurred.

The processing unit 9 comprises a communication interface, in particular a CAN interface, and is configured to receive a crash message, wherein the crash message indicates a crash of the vehicle. The crash message may be sent by an airbag control unit or another ECU of the vehicle.

The processing unit 9 is configured to provide on a terminal of the processing unit 9 a second shut-off signal 2nd_OFF which is activated when the processing unit 9 receives the crash message.

The first shut-off signal 1st_OFF has to fulfil certain safety requirements. The error detection mechanism of the first shut-off signal 1st_OFF is a hardware mechanism. In contrast the second shut-off signal 2nd_OFF uses a software mechanism.

Thus, two different mechanisms are used. Each mechanism fulfils the safety requirements of ASIL B (D).

An ASIL decomposition is used to split the ASIL rating of a safety requirement into several safety requirements with a lower ASIL. The safety requirement is split into independent elements (hardware mechanism and software mechanism) in order to achieve redundancy. The decomposed ASIL is marked accordingly so that decomposition can be verified.

The processing unit 9 may comprise additional software modules. Examples for such software modules are:
- a voltage monitoring module 91 which is configured to check the voltage provided by a system basis chip (SBC) 13,
- a current monitoring module 92 which is configured to check the input and output currents of the HV component 3 dependent on the sensor signals I_HV, I_LV provided by a first and/or second current sensor 15,17,
- a safety logic testing module 93
- a self-diagnostics module 94
- a KL30c monitoring control module 95.

The processing unit 9 may comprise hardware modules, for example, an analog-to-digital converter circuit, a CAN interface, a watchdog and an interrupt controller.

Each of the software modules and hardware modules are configured/designed to fulfil certain safety requirements, for example QM, ASIL A and ASIL B.

The processing unit 9 may be configured to control a conversion operation of the DC/DC converter by pulse-width-modulation.

The error collection device 11 comprises a first combinational logic circuit configured to receive the first shut-off signal 1st_OFF and the second shut-off signal 2nd_OFF. The first combinational logic circuit provides an OR-function. Preferably, the first combinational logic circuit fulfils the safety requirements of ASIL D. The first combinational logic circuit provides a first output signal STOP_1.

In an optional embodiment the error collection device 11 may comprise a second combinational logic circuit configured to receive one or more error signals from the system 1. This error signals may fulfill QM or ASIL A or ASIL B requirements. The second combinational logic circuit may be configured to combine the error signals with AND-gates and/or OR-gates. The second combinational logic circuit provides a second output signal STOP_2.

In this case, the error collection device 11 comprises a third combinational logic device to which the first output signal STOP_1 of the first combinational logic and the second output signal STOP_2 of the second combinational logic is fed as input signal. The third combinational logic is also designed in such a way that it fulfills the safety requirements of ASIL D. This can be achieved through sufficient circuit redundancy, for example. The third combinational logic circuit provides an OR-function. The third combinational logic circuit provides a third output signal STOP_DCDC which is configured to control a gate driver unit of the DC/DC converter to disable an energy transfer of the DC/DC converter.

In case the HV component 3 is an inverter, the energy transfer of the inverter is disable in the sense that the inverter does not provide its main function. The main function of the inverter is disabled.

The system 1 may comprise a system basis chip (SBC) 13. The SBC 13 is, for example, configured to receive the low voltage supply voltage of the low-voltage on-board electrical system and to provide different supply voltages, for example 5 V, 3,3 V and 1,3 V, to the processing unit 9. The SBC 13 may be configured to detect voltage supply errors and to send a corresponding error signal Error_SBC to the error collection device 11.

The healing module 20 is configured to check a status of the first shut-off signal 1st_OFF and the second shut-off signal 2nd_OFF, and to detect transient errors within in the crash detection dependent on the status of the first shut-off signal 1st_OFF and the second shut-off signal 2nd_OFF and to provide pre-defined healing steps for the detected transient errors.

The healing module 20 is, for example configured, to provide a computer implemented method for operating the safety apparatus 5.

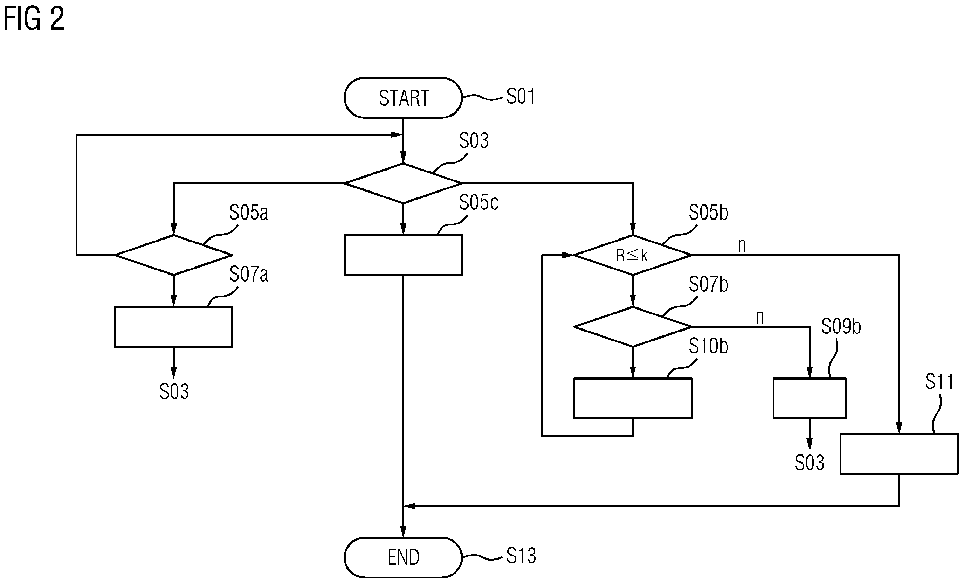

Figure 2 shows an exemplary flow chart for a program for this computer implemented method. The healing module 20 may be part of the processing unit 9 and the program may be executed by the processing unit 9 of the safety apparatus 5.

The program is first started in step S01. Furthermore, program variables are initialized in step S01, for example.

In step 03 it is checked whether the first shut-off signal 1st_OFF and the second shut-off signal 2nd_OFF are activated. Further, it is checked whether the vehicle is re-started. When the vehicle is re-started, the monitoring unit 7 and the processing unit 9 are caused to deactivate the first shut-off signal 1st_OFF and the second shut-off signal 2nd_OFF, respectively and subsequently the monitoring of the first shut-off signal 1st_OFF and the second shut-off signal 2nd_OFF is continued.

When in step S03 it is detected that only the first shut-off signal 1st_OFF is activated, in a step S05a it is checked after a predefined first period of time whether a condition which causes the activation of the first shut-off signal 1st_OFF is still valid by monitoring the voltage on the crash line KL30C based on provided sensor signals. When the voltage is above the predefined threshold or another predefined threshold in a step S07a the monitoring unit 7 is caused to deactivate the first shut-off signal 1st_OFF, so that the error collection device 11 provides the control signal to the HV component 3 such that the energy transfer of the HV component 3 is enabled. When the voltage is equal or below the predefined threshold or the other predefined threshold, respectively, the first shut-off signal 1st_OFF is kept activated. The program is continued in step S03. How often this loop is run through until a permanent safe state for the current remaining driving cycle is initiated can be defined by a vehicle manufacturer. In this embodiment no permanent safe state is initiated. As long as the first shut-off signal 1st_OFF is activated, the energy transfer of the HV component 3 is disabled.

When in step S03 is detected that only the second shut-off signal 2nd_OFF is activated, in a step S05b it is checked, whether there have already been resets of the processing unit 9, because only the second shut-off signal 2nd_OFF is activated. When it is detected that already a predefined number k of times resets of the processing unit 9 had been caused because only the second shut-off signal 2nd_OFF is activated, in a step S11b the processing unit 9 is caused to keep the second shut of signal activated for the complete remaining driving cycle which causes that the energy transfer of the HV component 3 is disabled the complete remaining driving cycle. When the number R of resets is not exceeded k in a step S07b is checked whether a further crash message is received and when during a predefined third period of time after the reset of the processing unit 9 not any crash message is received, in a step S09b the processing unit 9 is caused to deactivate the second shut-off signal 2nd_OFF, so that the error collection device 11 provides the control signal to the HV component 3 such that the energy transfer of the HV component 3 is enabled. In this case the program is continued in step S03. When it is detected, after completion of an induced reset of the processing unit 9, that only the second shut-off signal 2nd_OFF is activated, in a step S10b a further reset of the processing unit 9 is induced after a predefined fourth period of time. The program is continued in step S05b.

When in step S03 it is detected that the first shut-off signal 1st_OFF and the second shut-off signal 2nd_OFF are activated, in a Step 05c the processing unit 9 is caused to keep the second shut-off signal 2nd_OFF activated for the complete remaining current driving cycle and the monitoring unit 7 is caused to keep the first shut-off signal 1st_OFF activated for the complete remaining current driving cycle, which causes that the energy transfer of the HV component 3 is disabled the complete remaining driving cycle. The program ends in a step S13 when the current driving cycle ends.

### REFERENCE SIGNS

- 1: system
- 3: HV component
- 5: safety apparatus
- 7: monitoring unit
- 9: processing unit
- 91: voltage monitoring module
- 92: current monitoring module
- 93: self-diagnostics module
- 94: safety logic testing module
- 95: monitoring control module
- 96: an analog-to-digital converter circuit
- 97: SPL controller module
- 98: watchdog
- 99: interrupt controller
- 11: error collection device
- 13: system basis chip
- 15: first current sensor
- 17: second current sensor
- 20: healing module
- 1st_OFF: first shut-off signal
- 2nd_OFF: second shut-off signal
- CAN: communication interface
- ERROR_SBC: error signal of SBC
- KL30C: crash line
- PWM: pulse-width-modulation signal
- S01... S13: program steps

## Claims

1. Safety apparatus (5) for a high voltage, HV, component (3) of an at least
partially electrically powered vehicle comprising:
- a monitoring unit (7) connectable to a crash line (KL30c) of the vehicle and configured to check whether voltage on the crash line (KL30C) is below a predefined threshold and to provide to an output terminal of the monitoring unit (7) a first shut-off signal (1st_OFF) which is activated when the monitoring unit (7) detects that the voltage on the crash line (KL30C) is below the predefined threshold and which indicates, when activated, that a vehicle crash occurred,
- a processing unit (9) comprising a communication interface (CAN) and configured to receive a crash message, wherein the crash message indicates a crash of the vehicle and is provided by an entity of the vehicle which is configured to detect a crash of the vehicle, and wherein the processing unit (9) is configured to provide on a terminal of the processing unit (9) a second shut-off signal (2nd-OFF) which is activated when the processing unit (9) receives the crash message,
- an error collection device (11), configured to receive the first shut-off signal (1st_OFF) and the second shut-off signal (2nd-OFF) and to provide a control signal to the HV component (3) to control the energy transfer of the HV component (3) dependent on the first shut-off signal (1st_OFF) and the second shut-off signal (2nd-OFF),
- a healing module (20) which is configured to check a status of the first shut-off signal (1st_OFF) and the second shut-off signal (2nd-OFF), and to detect transient errors within in the crash detection dependent on the status of the first shut-off signal (1st_OFF) and the second shut-off signal (2nd-OFF) and to provide pre-defined healing steps for the detected transient errors.

2. The safety apparatus (5) according to claim 1, wherein the healing module (20) is configured
- to check whether the first shut-off signal (1st_OFF) is activated and whether the second shut-off signal (2nd_OFF) is activated,
- when detecting that only the first shut-off signal (1st_OFF) is activated, to check, after a predefined first period of time whether a condition which causes the activation of the first shut-off signal (1st_OFF) is still valid by monitoring the voltage on the crash line (KL30C) based on provided sensor signals and when the voltage is above the predefined threshold or another predefined threshold to cause the monitoring unit (7) to deactivate the first shut-off signal (1st_OFF), so that the error collection device (11) provides the control signal to the HV component (3) such that the energy transfer of the HV component (3) is enabled,
- when detecting that only the second shut-off signal (2nd_OFF) is activated, to induce a reset of the processing unit (9) after a predefined second period of time and, when during a predefined third period of time after a completion of the reset of the processing unit (9) not any crash message is received, to cause the processing unit (9) to deactivate the second shut-off signal (2nd_OFF), so that the error collection device (11) provides the control signal to the HV component (3) such that the energy transfer of the HV component (3) is enabled.

3. The safety apparatus (5) according to claim 1 or 2, wherein the healing module (20) is configured,
when detecting that the first shut-off signal (1st_OFF) and the second shut-off signal (2nd_OFF) are activated, to cause the processing unit (9) to keep the second shut-off signal (2nd_OFF) activated for the complete remaining current driving cycle and to cause the monitoring unit (7) to keep the first shut-off signal (1st_OFF) activated for the complete remaining current driving cycle.

4. The safety apparatus (5) according to claim any one of claims 1 to 3, wherein the monitoring unit (7) and the processing unit (9) are configured to deactivate the first shut-off signal (1st_OFF) and the second shut-off signal (2nd_OFF), respectively, when the vehicle is re-started.

5. The safety apparatus (5) according to any one of claims 2 to 4, wherein, the healing module (20) is configured, when detecting, after completion of an induced reset of the processing unit (9), that only the second shut-off signal (2nd_OFF) is activated, to induce a further reset of the processing unit (9) after a predefined fourth period of time.

6. The safety apparatus (5) according to any one of claims 2 to 5, wherein, the healing module (20) is configured to induce resets of the processing unit (9), because the second shut-off signal (2nd_OFF) is activated but the first shut-off signal (1st_OFF) is not activated, for a predefined number of times, and after inducing such resets of the processing unit (9) the predefined number of times to cause the processing unit (9) to keep the second shut of signal activated for the complete remaining driving cycle.

7. The safety apparatus (5) according to any one of claims 1 to 6, wherein the HV component (3) is a DC/DC converter, which is configured to convert a high voltage on-board power supply voltage of the high-voltage on-board electrical system of the vehicle to a low voltage on-board power supply voltage of a low-voltage on-board electrical system of the vehicle and vice versa.

8. Method for operating a safety apparatus (5) according to any one of claims 1 to 7 comprising the steps:
- checking whether the first shut-off signal (1st_OFF) is activated and whether the second shut-off signal (2nd_OFF) is activated,
- when detecting that only the first shut-off signal (1st_OFF) is activated, to check, after a predefined first period of time whether a condition which causes the activation of the first shut-off signal (1st_OFF) is still valid by monitoring the voltage on the crash line (KL30C) based on provided sensor signals and when the voltage is above the predefined threshold or another predefined threshold causing the monitoring unit (7) to deactivate the first shut-off signal (1st_OFF), so that the error collection device (11) provides the control signal to the HV component (3) such that the energy transfer of the HV component (3) is enabled,
- when detecting that only the second shut-off signal (2nd_OFF) is activated, to induce a reset of the processing unit (9) after a predefined second period of time and, when during a predefined third period of time after the reset of the processing unit (9) not any crash message is received, to cause the processing unit (9) to deactivate the second shut-off signal (2nd_OFF), so that the error collection device (11) provides the control signal to the HV component (3) such that the energy transfer of the HV component (3) is enabled.

9. The method according to claim 8 comprising the steps:
When detecting that the first shut-off signal (1st_OFF) and the second shut-off signal (2nd_OFF) are activated, causing the processing unit (9) to keep the second shut-off signal (2nd_OFF) activated for the complete remaining current driving cycle and causing the monitoring unit (7) to keep the first shut-off signal (1st_OFF) activated for the complete remaining current driving cycle.

10. The method according to claim 9 comprising the step:
Causing the monitoring unit (7) and the processing unit (9) to deactivate the first shut-off signal (1st_OFF) and the second shut-off signal (2nd_OFF), respectively, when the vehicle is re-started.

11. The method according to any one of claims 8 to 10 comprising the step:
When detecting, after completion of an induced reset of the processing unit (9), that only the second shut-off signal (2nd_OFF) is activated, inducing a further reset of the processing unit (9) after a predefined fourth period of time.

12. The method according to any one of claims 8 to 11 comprising the step:
After inducing resets of the processing unit (9), because only the second shut-off signal (2nd_OFF) is activated, more than a predefined number of times to cause the processing unit (9) to keep the second shut of signal activated for the complete remaining driving cycle.

13. Computer program comprising instructions which, when the program is executed by a control computer, causes the control computer to carry out the steps of the method according to any one of claims 8 to 12.

14. Computer-readable medium comprising instructions which, when executed by a control computer cause the control computer to execute the method according to any one of claims 8 to 12.

15. A healing module (20) for a safety apparatus (5) comprising a processor and a program memory configured to perform the method according to any one of claims 8 to 12.
